# EUROPÄISCHE PATENTSCHRIFT

(11) **EP 3 317 573 B1**
(45) Veröffentlichungstag und Bekanntmachung des Hinweises auf die Patenterteilung: **29.04.2020**
(21) Anmeldenummer: 15734158.7
(22) Anmeldetag: 03.07.2015
(51) Int. Cl.: F16L 33/025

(54) **SCHLAUCHKLEMME**
HOSE CLAMP
COLLIER DE SERRAGE POUR TUYAU

(43) Veröffentlichungstag der Anmeldung: 09.05.2018
(73) Patentinhaber: Oetiker Schweiz AG, 8810 Horgen (CH)
(72) Erfinder: MÜLLER, Manuel, CH-5626 Staffeln (CH); HÄNSLI, Willi, CH-8810 Horgen (CH); SCHWAIGER, Klaus, CH-8426 Lufingen (CH)
(74) Vertreter: Strehl Schübel-Hopf & Partner
(86) Internationale Anmeldenummer: PCT/EP2015/065259
(87) Internationale Veröffentlichungsnummer: WO 2017/005283

(56) Entgegenhaltungen:
- EP-A1- 0 777 075
- WO-A1-2007/128334
- US-A- 5 881 437
- US-A1- 2002 104 197

## Beschreibung

### Stand der Technik

Schlauchklemmen zum Anschluss etwa eines Schlauches an einen Rohrnippel werden meistens mit vorgegebenem Nenndurchmesser so gestaltet, dass im gespannten Zustand die Innenfläche des Klemmbandes über ihren gesamten Umfang lückenlos an dem Schlauch anliegt und zwischen diesem und dem Rohrnippel eine durchgehende Flächenpressung erreicht wird.

Aus EP 0 697 554 A und WO 2007/128334 A sind Schlauchklemmen bekannt, bei denen der innere Endabschnitt des Klemmbandes eine Zunge mit gegenüber der vollen Klemmbandbreite verringerter Breite sowie Haken zum Schließen der Schlauchklemme aufweist und der äußere Endabschnitt Öffnungen zur Einhängen der Haken, eine ohrartige Spanneinrichtung zum Spannen der Schlauchklemme um das Abbindegut hat. Im äußeren Endabschnitt des Klemmbandes ist ferner ein Bandbogen zur Aufnahme der Zunge vorgesehen, der unter Bildung seitlicher Bandstege durch Längsschnitte aus dem Klemmband freigeschnitten ist und an einer in dem Klemmband ausgebildeten, der Dicke des Klemmbandes entsprechenden Stufe beginnt..

Die Länge der Zunge ist so bemessen, dass im geschlossenen, noch nicht gespannten Zustand der Schlauchklemme die Zungenspitze die Stufe etwas überschreitet und von den seitlichen Bandstegen geführt wird, während im gespannten Zustand die volle Bandbreite die Stufe nicht erreichen darf. Die Länge der Zunge muss somit mindestens gleich der Umfangsdifferenz zwischen der ungespannten und der gespannten Schlauchklemme sein.

Aus EP 0 657 676 A2 ist eine Schlauchklemme bekannt, bei der der äußere Klemmbandabschnitt ein längliches Fenster mit einer Anschlagkante und der innere Klemmbandabschnitt eine Zunge mit einer Reihe von Haken aufweist, von denen einer im gespannten Zustand der Schlauchklemme an der Anschlagkante angreift. Diese Schlauchklemme gestattet grundsätzlich die Verwendung bei unterschiedlichen Durchmessern. In jedem Fall verbleibt allerdings zwischen dem inneren Ende der Zunge und dem äußeren Ende des Fensters ein Bereich, in dem der Schlauch nur durch die schmälere Zunge gestützt und der Dichtdruck entsprechend verringert ist.

Im Übrigen sind als im Durchmesser verstellbare Klemmen Schraubklemmen - etwa aus EP 0 523 600 A - bekannt, die in der Herstellung und in der Montage erheblich aufwändiger sind.

### Abriss der Erfindung

Der Erfindung liegt die generelle Aufgabe zugrunde, Nachteile, wie sie bei vergleichbaren Schlauchklemmen nach dem Stand der Technik auftreten, mindestens teilweise zu beseitigen. Eine speziellere Aufgabe der Erfindung kann darin gesehen werden, eine universelle Schlauchklemme zu schaffen, die bei unterschiedlichen Durchmessern anwendbar ist, jedoch unabhängig vom jeweiligen Durchmesser eine Abdichtung über im Wesentlichen die gesamte Klemmbandbreite gewährleistet.

Die Lösung dieser Aufgabe gelingt mit der in Anspruch 1 angegebenen Schlauchklemme. Bei dieser hat die Zunge nur die Aufgabe, die einander überlappenden Klemmbandenden zu führen, um ein seitliches Ausweichen zu verhindern. Die Zunge kann daher kurz sein, so dass Material gespart wird. Gleichzeitig entfallen Maßnahmen zur Versteifung der Zunge gegen Knicken, wie sie bei größeren Klemmendurchmessern und den entsprechend höheren auftretenden Kräften erforderlich sind. Wegen des Fehlens einer Stufe im Klemmband ist die erfindungsgemäße Schlauchklemme auch einfacher und mit einfacheren Werkzeugen herstellbar.

Bei großem Durchmesser-Variationsbereich ist es vorteilhaft, wenn der Bandbogen an mindestens einer Zwischenstelle mit den seitlichen Bandstegen zusammenhängt.

Werden die Öffnungen gemäß einer möglichen Gestaltung kreisrund ausgebildet, so sind sie bei einfacher Fertigung gegen Ausreißen besonders widerstandsfähig.

In weiterer vorteilhafter Ausbildung gehören zu den Haken ein Sicherungshaken zum Sichern der Schlauchklemme gegen unbeabsichtigtes Öffnen und mindestens ein Stützhaken zur kraftschlüssigen Verbindung der beiden Endabschnitte im gespannten Zustand der Schlauchklemme.

### Kurzbeschreibung der Zeichnungen

Ausführungsbeispiele der Erfindung werden nachstehend anhand der Zeichnungen näher erläutert. Darin zeigen
Fig. 1 eine perspektivische Darstellung der Schlauchklemme im gestreckten Zustand,
Fig. 2 und 3 einen Axialschnitt und eine Seitenansicht der Schlauchklemme nach

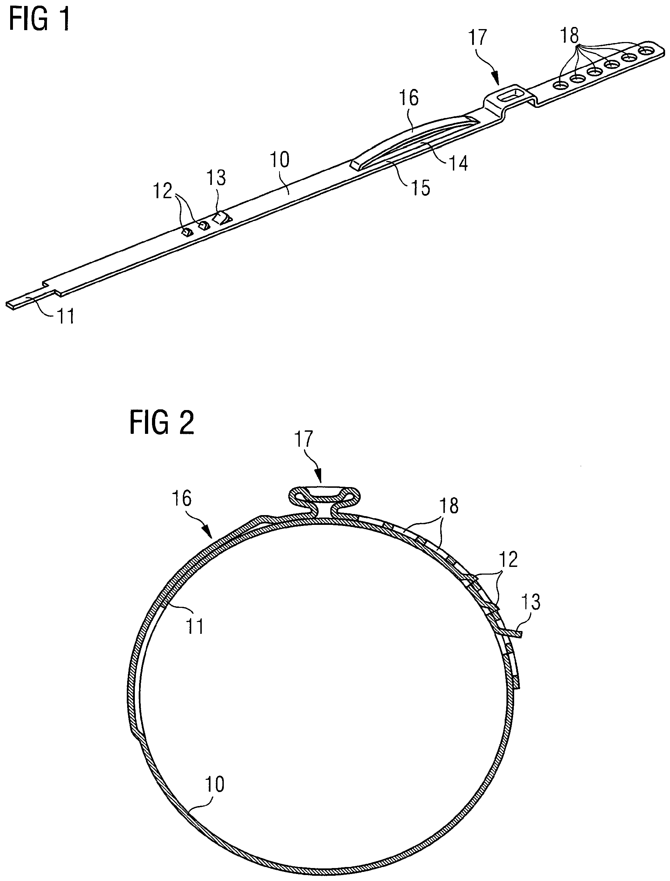

Fig. 1 im geschlossenen und gespannten Zustand,

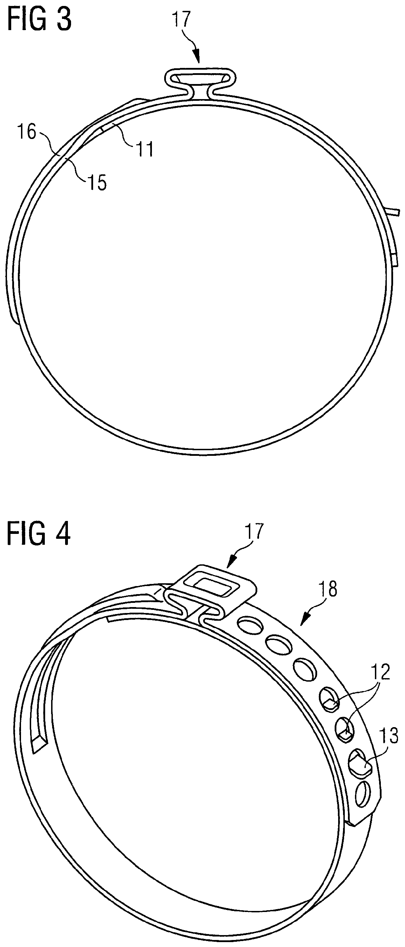

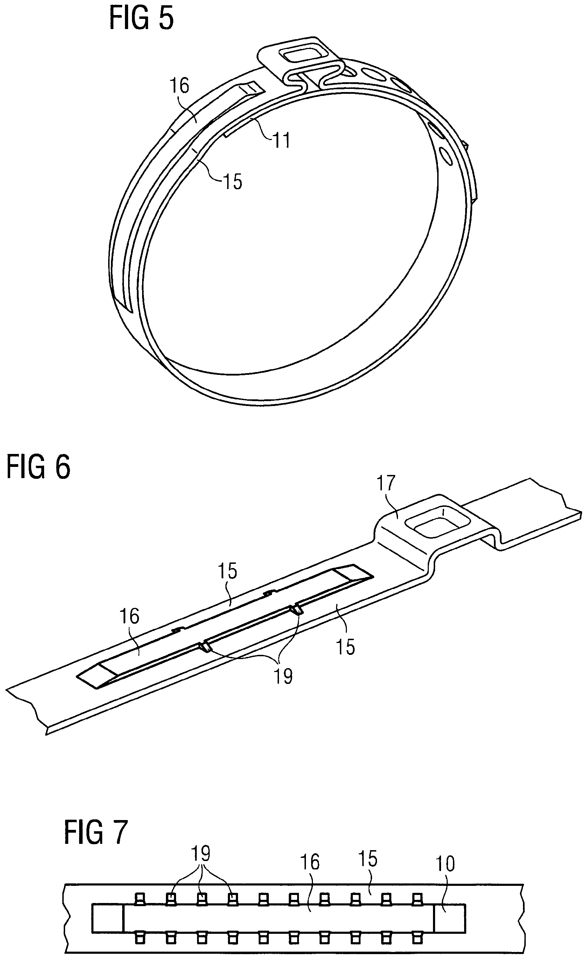

Fig. 4 und 5 perspektivische Darstellungen der Schlauchklemme im geschlossenen und gespannten Zustand,
Fig. 6 und 7 einem Teil der Fig. 1 entsprechende Darstellungen von Varianten der Schlauchklemme.

### Detaillierte Beschreibung von Ausführungsbeispielen

Die in den Zeichnungen dargestellte Schlauchklemme besteht aus einem offenen Klemmband **10**, das ausgehend von dem in Fig. 1 links unten gezeigten inneren Endabschnitt eine Zunge **11**, auf seiner im geschlossenen Zustand der Schlauchklemme äußeren Seite zwei Stützhaken **12** und einen Sicherungshaken **13**, einen durch zwei parallele Längsschnitte **14** unter Bildung seitlicher Bandstege **15** aus dem Klemmband **10** freigeschnittenen Bandbogen **16**, eine Spanneinrichtung **17** in Gestalt eines sogenannten "Oetiker"-Ohrs mit einem Paar von auswärts gekröpften Schenkeln und einem diese verbindenden, durch eine Sicke verstärkten Steg sowie in seinem anderen, äußeren Endabschnitt eine Reihe von kreisrunden Öffnungen **18** zur Aufnahme der Stützhaken **12** und des Sicherungshakens **13** aufweist.

Die hier beschriebene Schlauchklemme ist insbesondere zur Dichtung und Befestigung von Faltenbälgen, wie etwa im Einsatz bei Gelenkwellen, aus thermoplastischen Kunststoffen oder anderen schwer verformbaren Materialien mit hoher Shore-Härte gedacht.

Im Gebrauch wird die vom Hersteller im geschlossenen Zustand gelieferte Schlauchklemme axial auf das Abbindegut, etwa einen Rohrnippel und einen diesen umgebenden Schlauch, aufgeschoben oder alternativ zur radialen Montage geöffnet und um das Abbindegut herumgelegt, wobei die Zunge **11** zwischen den beiden seitlichen Bandstegen **15** unter dem Bandbogen **16** zu liegen kommt. Sodann wird bei Bedarf die geschlossene Schauchklemme geöffnet und der Sicherungshaken **13** in die dem kleinstmöglichen Durchmesser des jeweiligen Abbindegutes entsprechende Öffnung **18** eingehängt, wobei die Stützhaken **12** in die benachbarten Öffnungen **18** gelangen. Abschließend wird die Schlauchklemme durch Verengen des Ohrs der Spanneinrichtung **17** mittels eines zangenartigen Werkzeugs gespannt. Der Sicherungshaken **13** sichert die Klemmband-Endabschnitte gegen unabsichtliches Öffnen der geschlossenen Schlauchklemme; die Stützhaken stellen den Kraftfluss sicher. Alternativ können spezielle Stützhaken zum Einsatz kommen, welche in ihrer Form derart gestaltet sind, dass die Notwendigkeit eines zusätzlichen Sicherungshakens entfällt.

Beim Spannen wird die Zunge **11** durch den Bandbogen **16** in der dem jeweiligen Durchmesser entsprechenden Stellung auf das Niveau des innen liegenden Klemmbandes **10** gedrückt. Gleichzeitig werden die seitlichen Bandstege **15** durch die Zugkraft in dem Klemmband **10** und durch die Krümmung der Schlauchklemme an das Abbindegut gezogen, so dass in Kombination mit der Zunge **11** eine über den Umfang im Wesentlichen lückenlose Flächenpressung gewährleistet wird.

Wie in Fig. 6 und 7 gezeigt, können die parallelen Längsschnitte **14** an zwei oder mehreren Stellen **19** (oder auch nur an einer Stelle) unterbrochen sein, so dass der Bandbogen **16** hier mit den seitlichen Bandstegen **15** zusammenhängt. Diese Maßnahme kann bei großem Durchmesser-Variationsbereich zweckmäßig sein, um sicherzustellen, dass die Zunge **11** durch den Bandbogen in jedem Fall dicht an das Abbindegut gedrückt wird.

**Bezugszeichen**

| | |
|---|---|
| **10** | Klemmband |
| **11** | Zunge |
| **12** | Stützhaken |
| **13** | Sicherungshaken |
| **14** | Längsschnitte |
| **15** | Bandstege |
| **16** | Bandbogen |
| **17** | Spanneinrichtung |
| **18** | Öffnung |
| **19** | Verbindungsstellen |

## Patentansprüche

1. Schlauchklemme aus einem Klemmband (**10**) mit im geschlossenen Zustand der Schlauchklemme einander überlappenden Endabschnitten, von denen der überlappte, innere Endabschnitt eine Zunge (**11**) mit gegenüber der vollen Breite des Klemmbandes (**10**) verringerter Breite sowie Haken (**12, 13**) zum Schließen der Schlauchklemme und der überlappende, äußere Endabschnitt Öffnungen (**18**) zur Einhängen der Haken (**12, 13**), eine ohrartige Spanneinrichtung (**17**) zum Spannen der Schlauchklemme um einen zu klemmenden Gegenstand herum und einen Bandbogen (**16**) zur Aufnahme der Zunge (**11**) aufweist, wobei der Bandbogen (**16**) unter Bildung seitlicher Bandstege (**15**) durch Längsschnitte (**14**) aus dem Klemmband (**10**) freigeschnitten ist,
**dadurch gekennzeichnet,**
**dass** die Anzahl der Öffnungen (**18**) größer ist als die der Haken (**12, 13**),
**dass** das Klemmband (**10**) mit Ausnahme der ohrartigen Spanneinrichtung (**17**) stufenfrei ist und
**dass** die Länge der Zunge (**11**) kürzer ist als die Differenz zwischen der Umfangslänge der Schlauchklemme im ungespannten und der im gespannten Zustand.

2. Schlauchklemme nach Anspruch 1, wobei die Längsschnitte (**14**) unterbrochen sind, so dass der Bandbogen (**16**) an mindestens einer Zwischenstelle (**19**) mit den seitlichen Bandstegen (**15**) zusammenhängt.

3. Schlauchklemme nach Anspruch 1 oder 2, wobei die Öffnungen (**18**) kreisrund sind.

4. Schlauchklemme nach einem der vorhergehenden Ansprüche, wobei zu den Haken ein Sicherungshaken (**13**) zum Sichern der Schlauchklemme gegen unbeabsichtigtes Öffnen und mindestens ein Stützhaken (12) zur kraftschlüssigen Verbindung der beiden Endabschnitte im gespannten Zustand der Schlauchklemme gehören.

## Claims

1. Hose clamp comprising a clamping band (**10**) with overlapping end portions in the closed state of the hose clamp, of which the overlapped, inner end portion is a tongue (**11**) with a width being reduced as compared to the full width of the clamping band (**10**) and hooks (**12, 13**) for closing the hose clamp, the overlapping outer end portion having openings (**18**) for hooking the hooks (**12, 13**), an ear-like tensioning device (**17**) for tensioning the hose clamp around an object to be clamped and a band bow (**16**) for receiving the tongue (**11**), the band bow (**16**) being cut free from the clamping band (**10**) by longitudinal cuts (**14**) to form lateral band webs (**15**),
**characterised in**
**that** the number of openings (**18**) is greater than the number of the hooks (**12, 13**),
**that** the clamping band (**10**) is step-free with the exception of the ear-like tensioning device (**17**), and
**that** the length of the tongue (**11**) is shorter than the difference between the circumferential length of the hose clamp in the untightened and the tightened state.

2. Hose clamp according to claim 1, wherein the longitudinal cuts (**14**) are interrupted so that the band bow (**16**) is connected to the lateral band webs (**15**) at at least one intermediate point (**19**).

3. Hose clamp according to claim 1 or 2, wherein the openings (**18**) are circular.

4. Hose clamp according to any of the preceding claims, wherein the hooks include a securing hook (**13**) for securing the hose clamp against unintentional opening and at least one support hook (**12**) for non-positive connection of the two end sections in the tensioned state of the hose clamp.

## Revendications

1. Collier de serrage pour tuyau comprenant une bande de serrage (10) avec des parties d'extrémité se chevauchant dans l'état fermé du collier de serrage pour tuyau, dont la partie d'extrémité intérieure, chevauchée, est une languette (11) avec une largeur réduite par rapport à la largeur totale de la bande de serrage (10) et des crochets (12, 13) pour fermer le collier de serrage pour tuyau, la partie d'extrémité extérieure chevauchante comportant des ouvertures (18) pour accrocher les crochets (12, 13), un dispositif de tension en forme d'oreille (17) pour tendre le collier de serrage pour tuyau autour d'un objet à serrer et un arceau (16) pour recevoir la languette (11), l'arceau (16) étant découpé à partir de la bande de serrage (10) par des coupes longitudinales (14) pour former des bandes latérales (15),
**caractérisé en ce que** le nombre d'ouvertures (18) est supérieur au nombre de crochets (12, 13), dans lequel la bande de serrage (10) est exempte de décrochement à l'exception du dispositif de tension en forme d'oreille (17), et
dans lequel la longueur de la languette (11) est plus courte que la différence entre la longueur circonférentielle du collier de serrage pour tuyau dans l'état non resserré et dans l'état resserré.

2. Collier de serrage pour tuyau selon la revendication 1, dans lequel les coupes longitudinales (14) sont interrompues de sorte que l'arceau (16) est relié aux bandes latérales de bande (15) en au moins un point intermédiaire (19).

3. Collier de serrage pour tuyau selon la revendication 1 ou 2, dans lequel les ouvertures (18) sont circulaires.

4. Collier de serrage pour tuyau selon l'une des revendications précédentes, dans lequel les crochets comprennent un crochet de fixation (13) pour protéger le collier de serrage pour tuyau d'une ouverture involontaire et au moins un crochet de support (12) pour une connexion non positive des deux sections d'extrémité dans l'état tendu du collier de serrage.
